# EUROPEAN PATENT SPECIFICATION

(11) **EP 3 690 297 B1**
(45) Date of publication and mention of the grant of the patent: **16.03.2022**
(21) Application number: 20154501.9
(22) Date of filing: 30.01.2020
(51) Int. Cl.: F16L 3/133, F16L 3/137, F16L 3/127

(54) **VAULT SUPPORT**
GEWÖLBESTÜTZE
SUPPORT DE VOÛTE

(30) Priority: 01.02.2019 SE 1950120
(43) Date of publication of application: 05.08.2020
(73) Proprietor: AB Falu Plast, 791 22 Falun (SE)
(72) Inventor: Felleki, Jonas, 793 60 SILJANSNÄS (SE); Österberg, Jesper, 791 44 Falun (SE)
(74) Representative: Groth & Co. KB

(56) References cited:
- EP-A1- 3 239 577
- EP-A2- 2 650 989
- FR-A1- 2 522 373
- SE-L- 7 507 226

## Description

### Technical Field

The present invention relates to a fixing element denominated vault support, for an object, for instance a pipe, which is to be embedded in a floor structure. The fixing element allows a vertical fitting in of the object, for instance the pipe, in relation to a support substrate, for instance before embedment.

### Background of the Invention

For a mounting and an embedment of a pipe in a floor structure, it is required that the pipe is attached to the floor structure at correct height and that the pipe is fixed in this position during the embedment procedure.

Prior art in the field is seen in the Swedish patent application 7507226-4 (391 794) showing a pipe support which, used in pairs, can be used for a plurality of different pipe dimensions and, simultaneously, the height of the pipe above the support substrate can be adapted by rotation and fixation of the pipe support to the pipe. The pipe support according to the known technique is provided with a fixed arc-shaped portion which connects against the support substrate and is fastened to the same by a nail.

The problem of this design is that the contact surface against the support substrate is small and that manual nailing in this portion tends to crack the portion because of the arc-shape thereof. Also, nailing using a nailer in this portion is time-consuming because pre-drilling has to be carried out in order not to crack the portion.

Further prior art in the field is seen in the Norwegian document NO 126932 and in the German document DE 2251498. Document EP 2650989 A discloses a fastener with a foldable base.

### The Object of the Invention

The present invention has the object to solve the above-mentioned problems and provide a vault support for an object, for instance a pipe, which offers the corresponding possibilities of application and height adjustment of a pipe as the pipe support according to the known technique.

A further object is to allow an efficient handling of the mounting stage upon the mounting of said objects and thereby provide time savings.

### Summary of the Invention

By the present invention, as this appears in the independent claim, the above-mentioned objects are met, wherein said disadvantages have been eliminated. Suitable embodiments of the invention are defined in the dependent claims.

The invention concerns a vault support comprising a surrounding clamping strap for an object which clamping strap is provided with a ratchet device arranged to fix the clamping strap into essentially steplessly variable surround lengths. The ratchet device is preferably formed with teeth placed on one inner side of the strap and which co-operate with similar hooks on the outer side of the strap in an area for the joining of the clamping strap. Alternatively, the teeth are placed on the outer side of the strap which teeth co-operate with similar teeth placed outside the clamping strap in an area of a support leg fastened permanently to the clamping strap. The teeth are obliquely directed so that they snap over each other when the clamping strap is tightened around the object. An alternative to said teeth is that the ratchet device consists of a wedging device which acts locking against movement in only one direction. The clamping strap is furthermore permanently attached to a support leg which, when the clamping strap is in mounted state around the object, is directed essentially radially out from the object. Furthermore, the outer end of the support leg is provided with a support foot, which is connected to the support leg via a folding joint, for instance a hinge. The material of the vault support is impact- and cold-resistant plastic or the like and means that the clamping strap is flexible and can be bent around the pipe and be tighteningly arrested in the ratchet device. The vault support is used in pairs with a similar vault support and the pair is preferably used upon embedment of pipes in floor structures of concrete.

In one embodiment of the invention, the support foot is provided with a flat, lower contact surface. This flat surface aims at providing a relatively large contact surface against a support substrate, which most often is entirely flat. Thus, said flat contact surface affords an entirely surface-extended abutment against the support substrate, which affords an excellent pressure-relief for the object carried by the vault support.

In one embodiment of the invention, the folding joint is formed from the same material as the other parts of the vault support and consists of a folding line or a folding band in the material. The forming of the folding joint/folding band of the same material as the other parts of the vault support means that the entire vault support can be manufactured in only one working step.

In one embodiment of the invention, the upper surface of the support foot is provided with at least one raised guide edge. The shape of the support foot may be circular or oval and the guide edge thereof may be arc-shaped or angular with two sides. The guide edge constitutes a support to a mounting tool or to a fastening element.

In one embodiment of the invention, the support foot is rectangularly shaped and the upper surface of the support foot is provided with raised guide edges along at least two of the sides of the support foot, preferably along three of the sides. Said guide edges constitute an alignment device for a fixing tool, for instance a nailer.

In one embodiment of the invention, the upper surface of the support foot is provided with a non-through-going, centrally placed recess for the alignment of a fastening element, preferably a nail. The recess is furthermore present to guarantee/facilitate that fastening to the substrate takes place correctly by the fact that the fitter has a guiding to follow. The recess is formed as a non-through-going groove being arc-shapedly terminated in both ends. The recess d is about 0.3-1.0 mm, preferably 0.5 mm while the thickness t of the support foot is constant, 1.5 <= t <= 5 mm, preferably 3 mm.

In one embodiment of the invention, the ratchet device for the clamping strap is placed in the support leg, which possesses an access opening in the area of the ratchet device, so as to, by means of a tool, be able to open the locking device from the outer side of the support leg.

### Brief Description of the Drawings

The invention will now by reference designations in connection with the accompanying drawing figures be described in more detail.
- Figure 1: shows a pair of vault supports according to the present invention mounted for holding a pipe.
- Figure 2a: shows a separate vault support in perspective according to the invention from one side.
- Figure 2b: shows an enlargement of the tooth engagement in the encircled area in Figure 1.
- Figure 3: shows a planar view of the vault support according to Figure 2 from the other side.
- Figure 4: shows the support foot of the vault support in perspective from above in enlargement.
- Figure 5: shows the support foot of the vault support from the side in enlargement.

### Description of the Invention

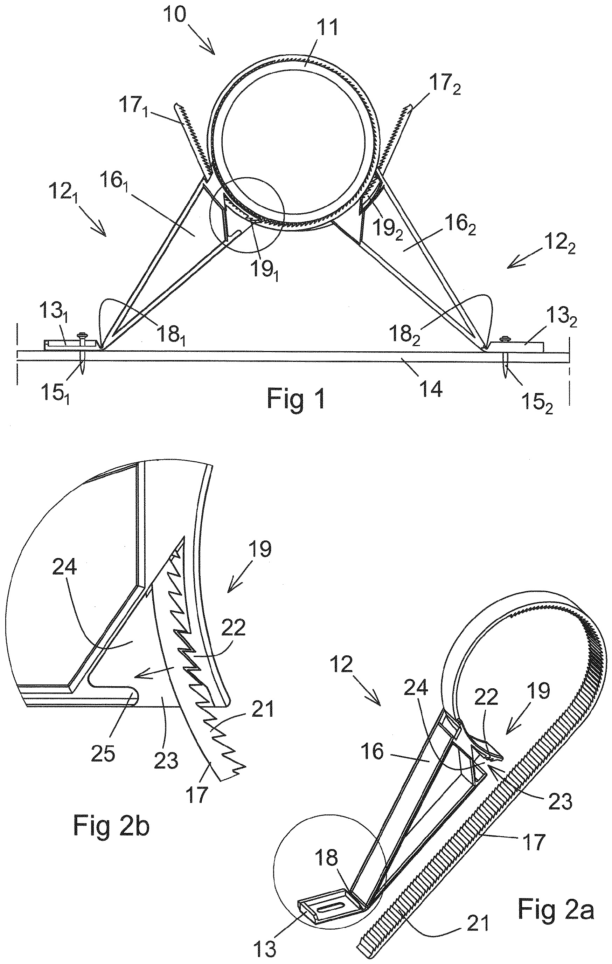

Figure 1 shows a pipe assembly 10 in which a pipe 11 is carried by a first vault support 12₁ and a second vault support 12₂. Each vault support is provided with a support foot 13₁, 13₂ each one of which provided with a flat under side and fastened to a substrate 14 by a nail 15₁, 15₂. The two vault supports 12₁, 12₂ are identically formed but reversely placed on the pipe axially beside each other in order to form support legs 16₁, 16₂ directed radially out from the pipe 11. Each vault support 12₁, 12₂ is provided with a clamping strap 17₁, 17₂, which extends from the respective support leg around the pipe and back to a ratchet device at the respective support leg in order to, in such a way, be clampable around the pipe in a suitable radial direction around the pipe. The direction is selected in view of desired vertical position of the pipe 11 in relation to the substrate 14. The respective support foot 13₁, 13₂ is connected to the respective support leg 16₁, 16₂ via a folding joint 18₁, 18₂. These folding joints work as hinges so that the support feet can connect flatly against the substrate and for the pipe to be adjustable into correct height. The ratchet devices 19₁, 19₂ consist of teeth of the clamping strap which engage similar teeth of the support leg.

Figure 2a shows a vault support 12, which is formed with a clamping strap 17 which, in one end thereof, is connected to a support leg 16 and has a free end in the other end thereof. The clamping strap 17 is provided with teeth 21 on one side thereof, which are arranged to co-operate with the corresponding teeth 22 of a ratchet device 19. The ratchet device 19 is placed between the support leg 16 and the end of the clamping strap at the support leg. At the support leg, the ratchet device 19 is provided with a strap entry 23 the opening of which is limited but which is greater than the thickness of the clamping strap so as to allow a displacement of the clamping strap by actuation from a laterally placed access opening 24 in the area of the ratchet device 19 with the purpose of detaching the tooth engagement of the ratchet device and thereby be able to loosen the vault support from a surrounded object. The outer end of the support leg 16 is provided with a support foot 13, which is connected to the support leg 16 via a folding joint 18.

Figure 2b shows an enlargement of the ratchet device 19 in the encircled area in Figure 1 (without pipe) when the clamping strap 17 is inserted in the strap entry 23 and where the teeth 21 of the clamping strap engage the teeth 22 of the ratchet device. Preferably, the teeth of the clamping strap engage with three teeth of the ratchet device according to the figure. The figure also shows that the strap entry 23 is limited by a stop edge 25 which constitutes stop for the clamping strap when this is displaced by a suitable tool out of tooth engagement in the direction of the arrow to detach the clamping strap.

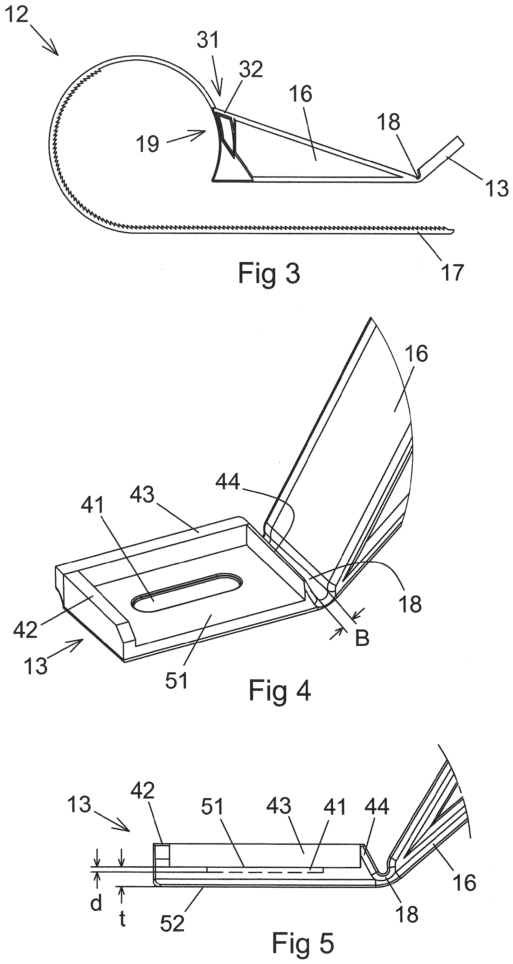

Figure 3 shows the vault support 12 in Figure 2 from the other side. The details shown in Figure 2 are seen also from Figure 3, i.e., the clamping strap 17, the ratchet device 19, the support leg 16, the support foot 13, and the folding joint 18 thereof as the connection of the support foot against the support leg. The figure shows in addition that the ratchet device 19 is provided with strap exit 31, which laterally is limited by a bridge 32 having the purpose of preventing the clamping strap during mounting or in mounted state from tilting upon load.

Figure 4 shows in enlargement the support foot 13 of the vault support from above. As previously described, the support foot 13 is connected to the support leg 16 via a folding joint 18. The support foot is rectangularly shaped and is on the upper surface 51 thereof formed with recess 41 for facilitating an alignment of the point of a nail for fastening the support foot and thereby the vault support to the substrate. The depth d of the recess is about 0.5-1.0 mm while the thickness t of the support foot 13 is constant, wherein 1.5 <= t <= 4 mm, preferably t = 2-3 mm. The nail is fastened by means of a hammer or by means of a nailer. In case the nail is fastened using a nailer, the support foot is provided with guide edges 42, 43, 44 on three sides of the support foot 13. The folding joint 18 is formed as a folding line or a folding band having a suitable width B.

Figure 5 shows in enlargement the support foot 13 of the vault support from the side with the guide edges 42, 43, 44, which work as supports during mounting and which are projecting from the upper surface 51 of the support foot. The folding joint 18 between the support foot 13 and the support leg 16 is placed on a level with the lower contact surface 52 of the support foot 13 so as to be supportable against the substrate during mounting and in such a way prevent positional change of mounted pipe in case of a possible collapsed or depressed folding joint or depressed vault support. The upper surface 51 and lower surface 52 of the support foot are essentially parallel to each other. The guide edge 44 that is placed parallel to the folding joint 18 is upward tapering for affording an increased angular motion of the support foot 13 in the folding joint 18 when the support foot is bent up toward the support leg 16. The figure also shows the depth d of the recess 41 in the upper surface 51.

## Claims

1. Vault support (12) comprising a clamping strap (17), a ratchet device (19) and a support leg (16), wherein the clamping strap (17) is arranged to co-operate with the ratchet device (19) arranged to fix the clamping strap (17) into essentially steplessly variable surround lengths around an object, for instance a pipe, which clamping strap (17) furthermore is permanently attached to the support leg (16) which in mounted state of the clamping strap (17) around the object, for instance the pipe, is directed straight out from the object, for instance, essentially in radial direction out from a pipe, and that the outer end of the support leg (16) is provided with a support foot (13), **characterized in that** the support foot (13) is connected to the support leg (16) via a folding joint (18), for instance a hinge, and **in that** the support foot (13) is provided with a flat, lower contact surface (52).

2. Vault support according to claim 1, **characterized in that** the folding joint (18) is formed from the same material as the other parts of the vault support (12) and consists of a folding line or a folding band having a width (B) in the material.

3. Vault support according to any one of the preceding claims, **characterized in that** the upper surface (51) of the support foot (13) is provided with at least one guide edge (42, 43, 44) in the form of a raised rib.

4. Vault support according to claim 3, **characterized in that** the support foot is rectangularly shaped and that the upper surface (51) of the support foot (13) is provided with guide edges (42, 43, 44) in the form of in the form of raised ribs along at least two of the sides of the support foot (13), preferably along three of the sides.

5. Vault support according to any one of the preceding claims, **characterized in that** the upper surface (51) of the support foot (13) is provided with a non-through-going, centrally placed recess (41) for the alignment of a fastening element, preferably a nail.

6. Vault support according to any one of the preceding claims, **characterized in that** the ratchet device (19) for the clamping strap (17) is placed in the support leg (16), which ratchet device (19) comprises an access opening (24) accessible from the side.

## Patentansprüche

1. Gewölbestütze (12), umfassend einen Spanngurt (17), eine Ratschenvorrichtung (19) und einen Stützschenkel (16), wobei der Spanngurt (17) dazu angeordnet ist, mit der Ratschenvorrichtung (19) zusammenzuwirken, die dazu angeordnet ist, den Spanngurt (17) in im Wesentlichen stufenlos variable Umfangungslängen um einen Gegenstand, beispielsweise ein Rohr, herum zu fixieren, wobei der Spanngurt (17) ferner permanent an dem Stützschenkel (16) angebracht ist, der in dem montierten Zustand des Spanngurts (17) um den Gegenstand, beispielsweise das Rohr, herum aus dem Gegenstand gerade heraus gerichtet ist, beispielsweise im Wesentlichen in radialer Richtung aus dem Rohr heraus, und dass das äußere Ende des Stützschenkels (16) mit einem Stützfuß (13) versehen ist, **dadurch gekennzeichnet, dass** der Stützfuß (13) über ein Klappgelenk (18), beispielsweise einem Scharnier, mit dem Stützschenkel (16) verbunden ist und dass der Stützfuß (13) mit einer flachen unteren Kontaktfläche (52) versehen ist.

2. Gewölbestütze nach Anspruch 1, **dadurch gekennzeichnet, dass** das Klappgelenk (18) aus demselben Material wie die anderen Teile der Gewölbestütze (12) ausgebildet ist und aus einer Falzlinie oder einem Faltband mit einer Breite (B) in dem Material besteht.

3. Gewölbestütze nach einem der vorhergehenden Ansprüche, **dadurch gekennzeichnet, dass** die obere Fläche (51) des Stützfußes (13) mit mindestens einem Führungsrand (42, 43, 44) in der Form einer erhabenen Rippe versehen ist.

4. Gewölbestütze nach Anspruch 3, **dadurch gekennzeichnet, dass** der Stützfuß rechtwinklig ausgebildet ist und dass die obere Fläche (51) des Stützfußes (13) mit Führungsrändern (42, 43, 44) in der Form von erhabenen Rippen entlang mindestens zweier der Seiten des Stützfußes (13), vorzugsweise entlang dreier der Seiten, versehen ist.

5. Gewölbestütze nach einem der vorhergehenden Ansprüche, **dadurch gekennzeichnet, dass** die obere Fläche (51) des Stützfußes (13) mit einer nicht durchgehenden, mittig platzierten Aussparung (41) für das Ausrichten eines Befestigungselements, vorzugsweise eines Nagels, versehen ist.

6. Gewölbestütze nach einem der vorhergehenden Ansprüche, **dadurch gekennzeichnet, dass** die Ratschenvorrichtung (19) für den Spanngurt (17) in dem Stützschenkel (16) platziert ist, wobei die Ratschenvorrichtung (19) eine von der Seite aus zugängliche Zugangsöffnung (24) umfasst.

## Revendications

1. Arceau de support (12) comprenant une lanière de serrage (17), un dispositif d'encliquetage (19) et une patte de support (16), la lanière de serrage (17) étant prévue pour coopérer avec le dispositif d'encliquetage (19) prévu pour fixer la lanière de serrage (17) à des longueurs périphériques variables essentiellement en continu autour d'un objet, par exemple un tuyau, ladite lanière de serrage (17) étant en outre attachée de façon permanente à la patte de support (16) qui, dans un état installé de la lanière de serrage (17) autour de l'objet, par exemple le tuyau, s'étend de façon rectiligne à partir de l'objet, par exemple essentiellement dans une direction radiale à partir d'un tuyau, et l'extrémité extérieure de la patte de support (16) étant pourvue d'un pied de support (13), **caractérisé en ce que** le pied de support (13) est raccordé à la patte de support (16) par le biais d'un raccord pliant (18), par exemple une charnière, et **en ce que** le pied de support (13) est pourvu d'une surface de contact inférieure (52) plate.

2. Arceau de support selon la revendication 1, **caractérisé en ce que** le raccord pliant (18) est formé à partir du même matériau que les autres parties de l'arceau de support (12) et est constitué d'une ligne de pliage ou d'une bande de pliage ayant une largeur (B) dans le matériau.

3. Arceau de support selon l'une quelconque des revendications précédentes, **caractérisé en ce que** la surface supérieure (51) du pied de support (13) est pourvue d'au moins un bord de guidage (42, 43, 44) sous la forme d'une nervure surélevée.

4. Arceau de support selon la revendication 3, **caractérisé en ce que** le pied de support est de forme rectangulaire et **en ce que** la surface supérieure (51) du pied de support (13) est pourvue de bords de guidage (42, 43, 44) sous la forme de nervures surélevées le long d'au moins deux des côtés du pied de support (13), de préférence le long de trois des côtés.

5. Arceau de support selon l'une quelconque des revendications précédentes, **caractérisé en ce que** la surface supérieure (51) du pied de support (13) est pourvue d'un évidement central borgne (41) pour l'alignement d'un élément de fixation, de préférence un clou.

6. Arceau de support selon l'une quelconque des revendications précédentes, **caractérisé en ce que** le dispositif d'encliquetage (19) pour la lanière de serrage (17) est placé dans la patte de support (16), ledit dispositif d'encliquetage (19) comprenant une ouverture d'accès (24) accessible depuis le côté.
